(19) Europäisches Patentamt
European Patent Office
Office européen des brevets

(11) **EP 4 004 782 B1**

(12) **EUROPEAN PATENT SPECIFICATION**

(45) Date of publication and mention
of the grant of the patent:
**04.09.2024 Bulletin 2024/36**

(21) Application number: **20753466.0**

(22) Date of filing: **23.07.2020**

(51) International Patent Classification (IPC):
**G06F 21/55** (2013.01)   **H04L 9/40** (2022.01)

(52) Cooperative Patent Classification (CPC):
**G06F 21/554; H04L 63/1416**

(86) International application number:
**PCT/IL2020/050826**

(87) International publication number:
**WO 2021/014454 (28.01.2021 Gazette 2021/04)**

(54) **INTRUSION ANOMALY MONITORING IN A VEHICLE ENVIRONMENT**

ANGRIFFSSANOMALIEÜBERWACHUNG IN EINER FAHRZEUGUMGEBUNG

SURVEILLANCE D'ANOMALIE D'INTRUSION DANS UN ENVIRONNEMENT DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2019 US 201962877962 P**

(43) Date of publication of application:
**01.06.2022 Bulletin 2022/22**

(73) Proprietor: **C2A-SEC, Ltd.
9695102 Jerusalem (IL)**

(72) Inventors:
  • **DAVIDOVICH, Yitzhack
    9326704 Jerusalem (IL)**
  • **NAIMAN, Aharon
    9045818 Efrat (IL)**
  • **KERSTEIN, Roie
    9055129 Beitar Eilit (IL)**

(74) Representative: **Graham Watt & Co LLP
St. Botolph's House
7-9 St. Botolph's Road
Sevenoaks TN13 3AJ (GB)**

(56) References cited:
**EP-A1- 2 892 202        EP-A1- 2 892 202
EP-A1- 3 148 236        EP-A1- 3 148 236
US-A1- 2020 053 113     US-A1- 2020 053 113**

• **ARMIN R WASICEK ET AL: "Context-aware
Intrusion Detection in Automotive Control
Systems", 5TH ESCAR USA, 21 June 2017
(2017-06-21), XP055577336, Retrieved from the
Internet
<URL:https://web.eecs.umich.edu/~mpese/pape
rs/Escar17_CAID_Paper.pdf> [retrieved on
20190403]**
• **ARMIN R WASICEK ET AL: "Context-aware
Intrusion Detection in Automotive Control
Systems", 5TH ESCAR USA, 21 June 2017
(2017-06-21), XP055577336, Retrieved from the
Internet
<URL:https://web.eecs.umich.edu/~mpese/pape
rs/Escar17_CAID_Paper.pdf> [retrieved on
20190403]**

**Description**

**CROSS-REFERENCE TO RELATED APPLICATIONS**

The present application claims priority from U.S. provisional patent application S/N 62/877,962 filed July 24, 2019 and entitled " INTRUSION ANOMALY MONITORING IN A VEHICLE ENVIRONMENT".

**FIELD OF THE INVENTION**

The invention relates generally to the field of security devices, and more specifically a system and method for monitoring intrusion anomalies in an automotive environment.

**BACKGROUND OF THE INVENTION**

The number of electronic devices being installed in-vehicles is rapidly increasing. In the past, electronic devices in automobiles were discrete devices handling a particular function, operating in a stand-alone environment. In the 1980's it was recognized that there would be a need to develop a network operating standard for vehicles, and the controller area network (CAN) bus was born.

Over time the number of interconnected devices utilizing a CAN bus has rapidly increased. These interconnected devices may control driving features, such as engine speed, braking control and steering control, as well as comfort features such as lighting, windows and sun-roof controls.

A further development has been the expansion of the Internet, and the ever growing demand for wireless access to the Internet. The expansion of cellular telephones and wireless Internet access ensures that in the future vehicles will be connected to external networks. In the recent past, access to the vehicle was restricted to the use of a dedicated service cable, and the only wireless access was for a radio delivering news and music. Today, an integrated infotainment system is being provided that delivers to the vehicle both entertainment and information content.

As the number of electronic devices in-vehicles have multiplied, a number of automotive manufacturers have agreed upon an open standard software architecture for automotive electronic control units (ECUs). Presently, the AUTOSAR consortium of Munich, Germany has released version 4.3 of the Autosar Classic Platform. Autosar compliant diagnostics are designed to detect actual failures, or defects, in one or more ECUs. The diagnostics use a particular communication protocol designated "Diagnostics over Internet Protocol" (DoIP), or unified diagnostic services (UDS), which are designed for communication between a test equipment and an ECU via an on-board Ethernet switch. DoIP is a transparent protocol, and does not involve translation between the test equipment and the ECU. DoIP is defined in ISO 13400, Part 2, published by the International Organization for Standardization, Geneva, Switzerland. DoIP facilitates diagnostics related communication between external test equipment and automotive ECUs. A diagnostic communication manager (DCM) within the ECU communicates with the test equipment, transferring the relevant pre-defined diagnostic trouble code (DTC) defined by the automotive manufacture which is representative of an detected failure in the respective ECU.

Although systems for generating and communicating detected faults in the various ECUs, the prior art lacks a system to monitor and identify attacks by external attackers attempting to intrude on any portion of the automotive communication network. This includes, but is not limited to: statistical anomalies in the data being transmitted over the network, e.g. a distributed denial of service (DDOS) attack, as will be described below; attempts to spoof a MAC address of an ECU; subscription requests from IP of PORT; incorrect values in SOME/IP information; signals which deviate from a predefined model or rule; stack overflows; and return-oriented programming attacks. Additionally, no mechanism is provided for vehicle to vehicle DoIP communication, thus vehicles cannot share DTCs with each other.

European patent publication EP 3148236 is addressed to a system or method that may include an in-vehicle network including an interface port for connecting an external device to the in-vehicle network; and a security unit connected to the in-vehicle network, the security unit adapted to enable an external device to communicate with the in-vehicle network, over the interface port, based on a security token received from the external device. A system or method may, based on a token, prevent an external device from at least one of: communicating with a selected set of components on in an in-vehicle network, communicating with a selected set of network segments in the in-vehicle network and performing a selected set of operations.

European patent publication EP 2892202 is addressed to an in-vehicle communication network comprising: a bus and at least one node connected to the bus; an in-vehicle network operating system (OS) that manages OS processes, a secondary memory in which process codes for the processes are stored, and a primary memory, into which the OS loads a copy of a process code of a process to enable a processor to run the process and execute the process code; and a module hosted in the OS and having a hook in at least one position of the OS that provides information to the module responsive to operation of the OS that the module processes in accordance with executable instructions that the module comprises to determine if the in-vehicle OS is operating properly.

A paper titled "Context-aware Intrusion Detection in Automotive Control Systems", authored by Wasicek et al., and published by the 5th ESCAR USA conference, 21 June 2017, is addressed to a method and framework to detect manipulations in automotive control systems. The paper presents a context-aware intrusion detection system (CAID) framework capable to recognize manipulations of the physical system using cyber means.

US patent application publication US 2020/053113 is addressed to a data analysis apparatus that includes: a processor; and a memory including a set of instructions that, when executed by the processor causes the processor to perform operations including: obtaining anomaly analysis results each including information identifying anomaly data of first and second vehicles provided with an in-vehicle network including one or more networks; identifying, for each of the first and second vehicles, a primary ECU having higher relevance to the anomaly data among ECUs connected to the in-vehicle network; identifying, for each of the first and second vehicles, ECUs connected to a network in the one or more networks to which the primary ECU is connected as a secondary ECU set; and identifying an ECU included in both of the secondary ECU set identified for the first vehicle and the secondary ECU set identified for the second vehicle and satisfying a predetermined condition as an anomaly-relevant ECU.

## SUMMARY OF THE INVENTION

Accordingly, it is a principal object of the present invention to overcome at least some of the disadvantages of prior art bus control methods and systems. This is provided in one embodiment by a system according to claim 1,

In one embodiment, the anomaly analyzer is further arranged to determine a vehicle status grade, the vehicle status grade determined responsive to a predetermined function of the received at least one vehicle status signal, wherein the anomaly incident list comprises a plurality of sets of anomaly incident list parameter values, the comparison performed in relation to the plurality of sets of anomaly incident list parameter values, and wherein the anomaly incident list parameter values are selected responsive to the determined vehicle status grade. In another embodiment, the at least one security monitor is arranged to detect the intrusion anomalies responsive to a predetermined attribute of one or more messages not meeting a predetermined validation parameter value, and wherein responsive to the predetermined outcome of the comparison, the anomaly analyzer is further arranged to: generate an adjustment signal; and output the generated adjustment signal to the at least one security monitor, the predetermined validation parameter value of the at least one security monitor adjusted responsive to the generated adjustment signal.

In one embodiment, the received at least one vehicle status signal comprises at least one signal indicating a status of at least one internal system of the vehicle. In another embodiment, the received at least one vehicle status signal indicating a status of at least one internal system of the vehicle comprises at least one signal indicating a status of: a speed of the vehicle; a steering wheel angle of the vehicle; a gear the vehicle is in; brakes of the vehicle; an engine of the vehicle; or a position of a gyro of the vehicle.

In one embodiment, the received at least one vehicle status signal comprises at least one signal indicating a status of an environment external to the vehicle. In another embodiment, the received at least one vehicle status signal comprises at least one signal indicating a status of additional vehicles surrounding the vehicle.

In another embodiment, the system further comprises a communication control unit arranged to control data communication with the at least one electronic control unit, wherein the at least one anomaly incident comprises a plurality of anomaly incidents, the predetermined outcome of the comparison comprising identifying that the accumulated output information indicates the presence of one of the plurality of anomaly incidents, wherein the predetermined incident signal is selected from a plurality of predetermined incident signals responsive to the respective detected one of the plurality of anomaly incidents, and wherein, the plurality of predetermined incident signals comprises: an alert message; and a command to disable a communication function of the communication control unit.

In one embodiment, wherein the at least one electronic control unit comprises a plurality of electronic control units, and wherein the at least one security monitor comprises a plurality of local security monitors, each of the plurality of local security monitors associated with a respective one of the plurality of electronic control units.

In one independent embodiment, a method of monitoring intrusion anomalies in an automotive vehicle according to claim 9 is provided.

In one embodiment, the method further comprises determining a vehicle status grade, the vehicle status grade determined responsive to a predetermined function of the received at least one vehicle status signal, wherein the anomaly incident list comprises a plurality of sets of anomaly incident list parameter values, the comparison performed in relation to the plurality of sets of anomaly incident list parameter values, and wherein the anomaly incident list parameter values are selected responsive to the determined vehicle status grade. In another embodiment, the detecting the intrusion anomalies responsive to a predetermined attribute of one or more messages not meeting a predetermined validation parameter value, and wherein responsive to the predetermined outcome of the comparison, the method further comprises: generating an adjustment signal; and outputting the generated adjustment signal, the predetermined validation parameter value adjusted responsive to the output adjustment signal.

In one embodiment, the received at least one vehicle status signal comprises at least one signal indicating a status of at least one internal system of the vehicle. In another embodiment, the received at least one vehicle status signal indicating a status of at least one internal system of the vehicle comprises at least one signal indicating a status of: a speed of the vehicle; a steering wheel angle of the vehicle; a gear the vehicle is in; brakes of the vehicle; an engine of the vehicle; or a position of a gyro of the vehicle.

In one embodiment, the received at least one vehicle status signal comprises at least one signal indicating a status of an environment external to the vehicle. In another embodiment, the received at least one vehicle status signal comprises at least one signal indicating a status of additional vehicles surrounding the vehicle.

In another embodiment, the at least one anomaly incident comprises a plurality of anomaly incidents, the predetermined outcome of the comparison comprising identifying that the accumulated output information indicates the presence of one of the plurality of anomaly incidents, wherein the predetermined incident signal is selected from a plurality of predetermined incident signals responsive to the respective detected one of the plurality of anomaly incidents, and wherein, the plurality of predetermined incident signals comprises: an alert message; and a command to disable communication to the at least one electronic control unit. Additional features and advantages of the invention will become apparent from the following drawings and description.

## BRIEF DESCRIPTION OF THE DRAWINGS

For a better understanding of the invention and to show how the same may be carried into effect, reference will now be made, purely by way of example, to the accompanying drawings in which like numerals designate corresponding sections or elements throughout.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how several forms of the invention may be embodied in practice. In the accompanying drawings:

FIGs. 1A - 1F illustrate high level block diagrams of various embodiments of a system for monitoring intrusion anomalies in a vehicle environment; and

FIG. 2 illustrates a high level flow chart of a method for monitoring intrusion anomalies in a vehicle environment, in accordance with certain embodiments.

## DETAILED DESCRIPTION OF THE PREFERRED EMBODIMENTS

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

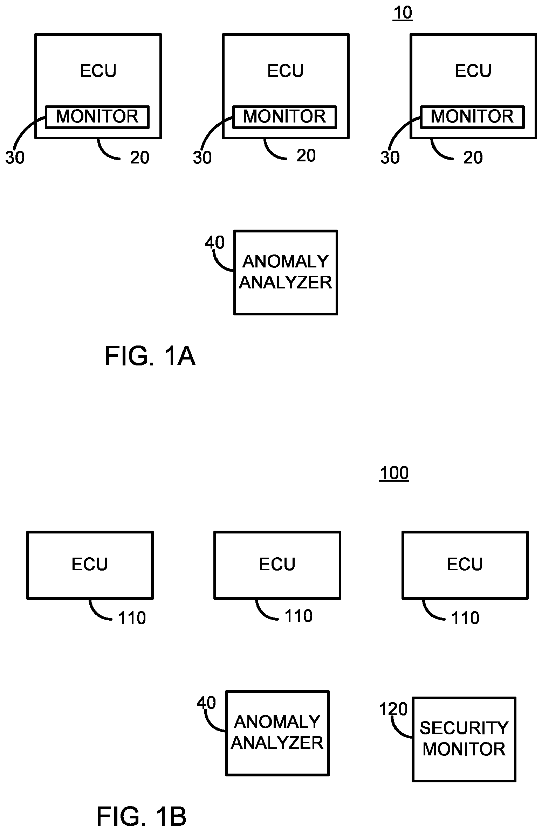

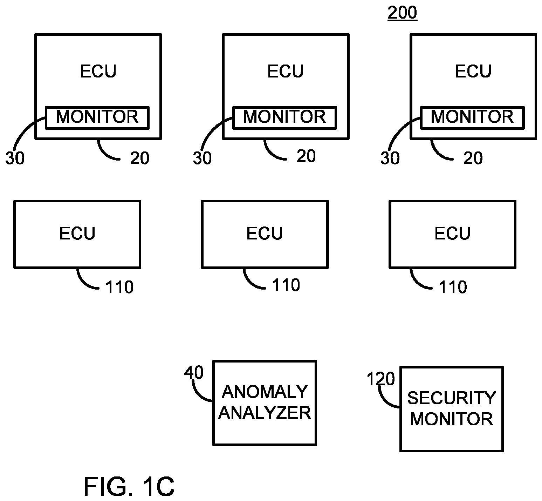

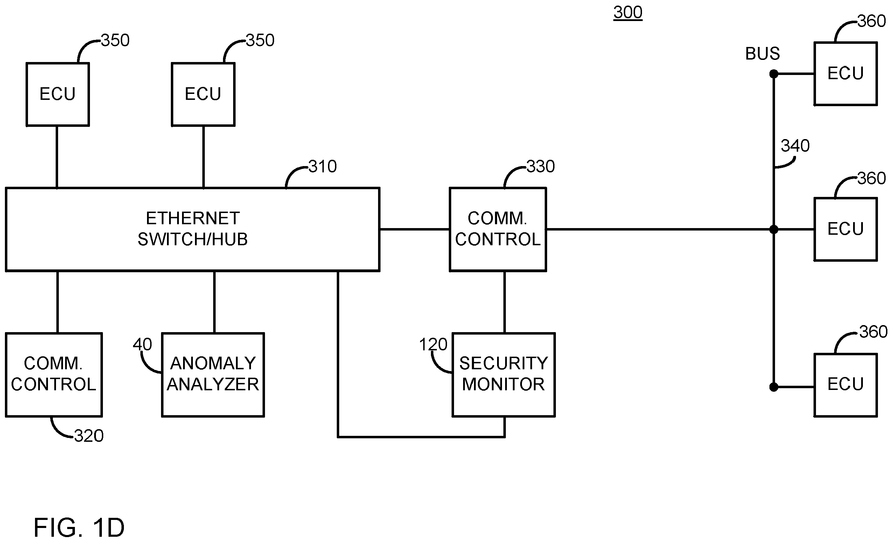

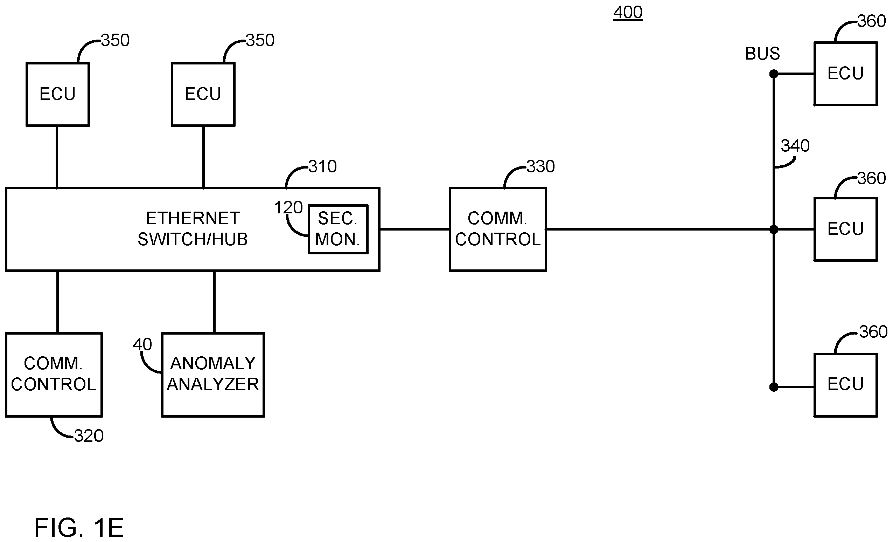

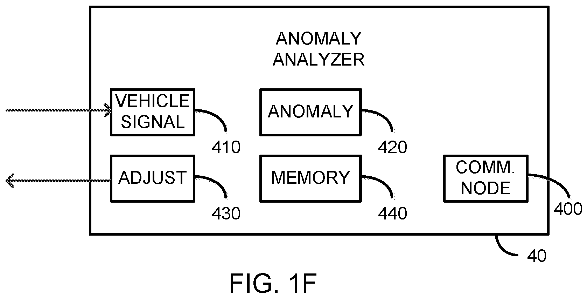

FIG. 1A illustrates a high level block diagram of a system 10 for monitoring intrusion anomalies in a vehicle environment, FIG. 1B illustrates a high level block diagram of a system 100 for monitoring intrusion anomalies, FIG. 1C illustrates a high level block diagram of a system 200 for monitoring intrusion anomalies, FIG. 1D illustrates a high level block diagram of a system 300 for monitoring intrusion anomalies, FIG. 1E illustrates a high level block diagram of a system 400 for monitoring intrusion anomalies and FIG. 1F illustrates a high level block diagram of respective portions of systems 10, 100, 200 and 300. FIGs. 1A - 1F are described together.

System 10 comprises: a plurality of ECUs 20, each comprising a respective security monitor 30; and an anomaly analyzer 40. Each ECU 20 is illustrated as comprising the respective security monitor 30, however this is not meant to be limiting in any way. In another embodiment, each security monitor 30 is provided external to the respective ECU 20 and is in communication with the respective ECU 20. Anomaly analyzer 40 is in communication with security monitors 30.

System 100 comprises: a plurality of ECUs 110; a security monitor 120; and an anomaly analyzer 40. Security monitor 120 is in communication with ECUs 110 and anomaly analyzer 40 is in communication with security monitor 110. System 200 comprises: a plurality of ECUs 20, each comprising a respective security monitor 30; a plurality of ECUs 110; a security monitor 120; and an anomaly analyzer 40. Security monitor 120 is in communication with ECUs 110. Anomaly analyzer 40 is in communication with security monitors 30 of ECUs 20 and security monitor 120.

System 300 comprises: an Ethernet switch/hub 310; a communication control unit 320; a communication control unit 330; a bus 340; a plurality of ECUs 350; a plurality of ECUs 360; and a security monitor 120. In one embodiment, Ethernet switch/hub 310 is either an Ethernet switch or an Ethernet hub. In another embodiment, communication control unit 320 comprises a smart antenna. In one embodiment, communication control unit 320 comprises a telematic control unit (TCU). In another embodiment, communication control unit 320 comprises a telematics box. In one embodiment, communication control unit 320 comprises a wireless data link, which may be implemented by equipment compatible with global system for mobile communication (GSM), evolution data optimized (EV-DO), wideband code division multiple access (W-CDMA), high speed packet access (HSPA), worldwide interoperability for microwave access (WIMAX), and/or long term evolution (LTE), without limitation.

In one embodiment, communication control unit 330 comprises a gateway. In another embodiment, communication control unit 330 comprises a domain controller unit (DCU). In one embodiment, bus 340 is a CAN bus. In one further embodiment, communication control unit 330 acts as a CAN gateway. Each of communication control unit 320, communication control unit 330 and ECUs 350 is in communication with Ethernet switch/hub 310. Bus 340 is in communication with communication control unit 330 and each of ECUs 360 is in communication with bus 340. In one embodiment, security monitor 120 is in communication with Ethernet switch/hub 310 and/or communication control unit 330. In one further embodiment, security monitor 120 is coupled to a respective port of Ethernet switch/hub 310. In another embodiment (not shown), security monitor 120 is implemented within Ethernet switch/hub 310, as illustrated in system 400. Particularly, system 400 is in all respects similar to system 300, with the exception that security monitor 120 is implemented within Ethernet switch/hub 310. In another embodiment (not shown), security monitor 120 is implemented within communication control unit 320. In another embodiment (not shown), security monitor 120 is implemented within communication control unit 330. System 300 is illustrated in an embodiment where a single security monitor 120 is provided, however this is not meant to be limiting in any way. In another embodiment, a plurality of security monitors 120 are provided, each in communication with, and/or implemented within, Ethernet switch/hub 310, communication control unit 320 and/or communication control unit 330.

Systems 10, 100, 200 and 300 are illustrated and described in an embodiment where security monitors 30 and 120 are separated from anomaly analyzer 40, however this is not meant to be limiting in any way. In another embodiment (not shown), anomaly analyzer 40 and one or more of security monitors 30 and/or 120 are implemented together as a single component, such as different code sections of a program.

In one embodiment, anomaly analyzer 40 is located within a first vehicle and is in communication with security monitors 30 and/or 120 of a second vehicle (not shown). In another embodiment, anomaly analyzer 40 is further in communication with an external anomaly monitor (not shown), optionally via a wireless Internet connection..

FIG. 1F illustrates a high level block diagram of a detailed embodiment of anomaly analyzer 40. In the illustrated embodiment, anomaly analyzer 40 comprises: a communication node 400; a vehicle signal functionality 410; an anomaly functionality 420; an adjustment functionality 430; and a memory 440. Although communication node 400, vehicle signal functionality 410, anomaly functionality 420 and adjustment functionality 430 are described herein as separate components, this is not meant to be limiting in any way. In one particular embodiment, communication node 400, vehicle signal functionality 410, anomaly functionality 420 and adjustment functionality 430 are each performed by a respective dedicated routine on a processor. Vehicle signal functionality 410 is in one embodiment in communication with Ethernet switch/hub 310 and/or communication control unit 330. Anomaly analyzer 40 may be implemented in an FPGA, microcontroller, or processor with associated memory, the associated memory holding electronically readable instructions, which when implemented perform the tasks as described.

Anomaly analyzer 40 has stored therein an anomaly incident list. Optionally, the anomaly incident list is stored on memory 440. The term 'list', as used herein, is not meant to limit the way the information of the anomaly incident list is stored and arranged in any way. The anomaly incident list comprises at least one anomaly incident, preferably a plurality of anomaly incidents. The term anomaly incident list, as used herein, is meant as information regarding predetermined attributes of the at least one anomaly incidents. In one embodiment, the anomaly incident list comprises a list of rules wherein anomaly analyzer 40 compares different attributes of received intrusion anomalies to predetermined rule sets, as will be described below.

In one embodiment, Ethernet switch/hub 310 is programmed to transmit towards security monitor 120 a copy of all messages traversing Ethernet switch/hub 310, so that the messages are visible to security monitor 120 for sniffing.

In an embodiment where security monitor 120 is implemented in communication control unit 330, and communication control unit 330 is implemented as a gateway, Ethernet switch/hub 310 optionally forwards all, or some, of the packets to gateway 330 for routing. In this case, security monitor 120 in one embodiment performs analysis on all of the packets, or certain packets that are defined for inspection. In another embodiment, Ethernet switch/hub 310 performs packet mirroring to copy the respective packets and send the copies to security monitor 120.

In another embodiment, Ethernet switch/hub 310 enforces predefined security policies in the hardware. For example, Ternary Content Addressable Memory (TCAM) in the context of networking devices allows for efficient pattern matching of incoming packets to predefined patterns in the hardware. Each of these predefined patterns can have configurable actions attached to it. If a TCAM hit occurs, meaning the packet matches a predefined pattern, the defined actions are executed for the respective packet. In one embodiment, the defined actions comprise:

1. dropping the packet that generated the TCAM hit;
2. incrementing a counter;
3. changing the physical destination port of the packet that generated the TCAM hit;
4. assigning the packet that generated the TCAM hit to a QoS class identifier (QCI) stream; and/or
5. changing the virtual local area network (VLAN) tag of the respective packet.

Using these abilities, the Ethernet switch/hub 310 is configured in such an embodiment to forward defined packets for further analysis, or for reporting, to security monitor 120. In another embodiment, as described above, security monitor 120 is implemented within Ethernet switch/hub 310. In such an embodiment, when a TCAM hit occurs, an intrusion anomaly is identified by security monitor 120, and security monitor 120 notifies anomaly analyzer 40 of the intrusion anomaly, as will be described below.

In one non-limiting example, a predetermined rate limit enforcement is configured to a packet using a QCI streams concept, as described in the IEEE P802.1Qci standard, the entire contents of which is incorporated herein by reference. In the event that the number of packets exceeds the predetermined rate limit, the security monitor 120 implemented in an internal CPU of Ethernet switch/hub 310 reads a defined register for its value to detect if a packet is dropped due to the rate limit violation. Then, the security monitor 120 in the internal CPU of the Ethernet switch/hub 310 notifies anomaly analyzer 40 about this intrusion anomaly.

In another non-limiting example, one of the TCAMs in Ethernet switch/hub 310 is configured to change the packet destination in the case of an unallowed packet. In one embodiment, the new packet destination is security monitor 120. In another embodiment, as described above, wherein security monitor 120 is implemented within Ethernet switch/hub 310, responsive to a TCAM hit, security monitor 120 detects this as an intrusion anomaly and outputs information regarding the intrusion anomaly to anomaly analyzer 40, as will be described below. In one further embodiment, security monitor 120 changes the packet destination of the packet to anomaly analyzer 40, thereby providing anomaly analyzer 40 with the entire packet.

In another non-limiting example, one of the TCAMs in Ethernet switch/hub 310 changes the VLAN ID to a unique ID which encodes information regarding the detected intrusion anomaly. In such an embodiment, anomaly analyzer 40, and/or security monitor 120, are members of the VLAN ID, and will receive the respective packet.

Systems 10, 100, 200, 300 are each illustrated in an embodiment where anomaly analyzer 40 is in direct communication with security monitors 30 and/or security monitor 120, however this is not meant to be limiting in any way. In another embodiment (not shown), one or more additional components are provided which perform the communication between the various security monitors 30, or security monitor 120, and anomaly analyzer 40, as will be described below. Particularly, in one embodiment, a diagnostic communication manager (DCM) is provided, which performs communication between: security monitors 30 and/or security monitor 120; and anomaly analyzer 40. Systems 10, 100, 200, 300 are each illustrated, and described herein, as comprising a plurality of ECUs, however this is not meant to be limiting in any way. In another embodiment (not shown), a single ECU 20, 110, 350 or 360 is provided. The operations of systems 10, 100, 200 and 300 are described together.

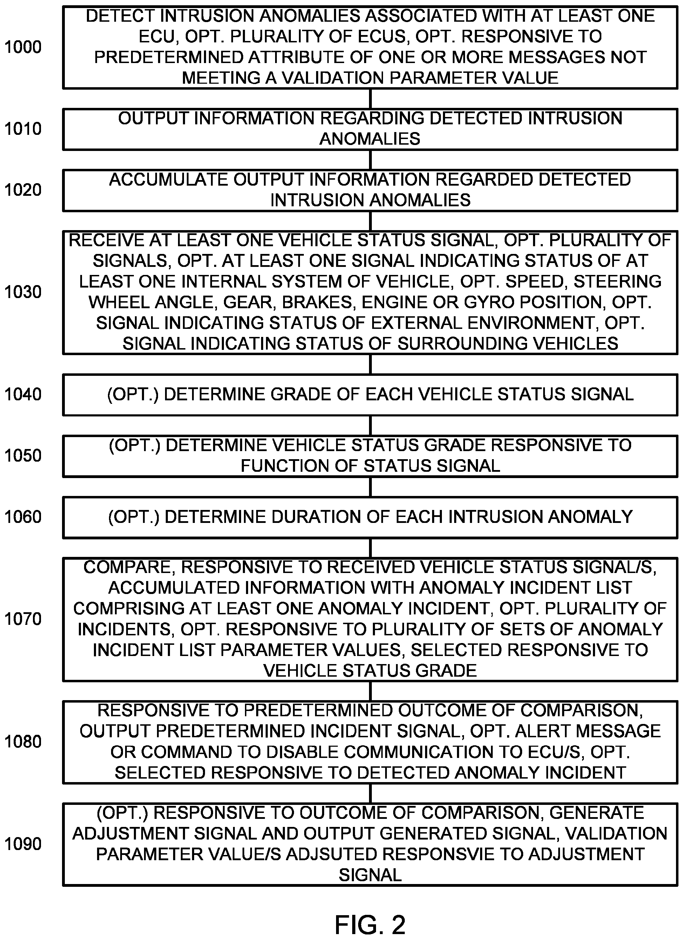

FIG. 2 illustrates a high level flow chart of a method for monitoring intrusion anomalies in a vehicle environment, in accordance with certain embodiments. The method of FIG. 2 is described herein in relation to systems 10, 100, 200 and 300 however this is not meant to be limiting in any way, and the method of FIG. 2 can be implemented by any suitable system, without exceeding the scope. In stage 1000, security monitors 30 and/or security monitor 120 detect intrusion anomalies associated with the respective ECUs 20, 110, 350 and 360. The term 'intrusion anomaly', as used herein, is defined as an anomaly associated with an attempt by an attacker to intrude on any portion of the automotive communication network. This includes, but is not limited to: statistical anomalies in the data being transmitted over the network, e.g. a distributed denial of service (DDOS) attack; attempts to spoof a media access control (MAC) address of an ECU; subscription requests from an internet protocol (IP) address of a port; incorrect values in scalable service-oriented middleware over IP (SOME/IP) information; signals which deviate from a pre-defined model or rule; stack overflows; and return-oriented programming attacks.

In one embodiment, security monitors 30 and/or security monitor 120 monitors messages directed at the respective ECUs 20, 110, 350 and 360. In the embodiment of system 300, security monitor 120 optionally snoops, or actively blocks, messages addressed to the respective ECUs 350 and/or 360, by monitoring activity on Ethernet switch/hub 310. In another embodiment, security monitor 120 monitors messages directed at bus 340. In another embodiment (not shown), one or more security monitors 30 and/or 120 monitor messages directed at communication control unit 320 and/or communication control unit 330 to determine intrusion anomalies directed thereat.

In one embodiment, at least one predetermined attribute of one or more messages is compared to one or more values of predetermined validation parameter to identify an intrusion anomaly. In one further embodiment, a machine learning algorithm is used to compare correlation of signals with a pre-defined model. In the event that the signals deviate from the pre-defined model, an intrusion anomaly is detected. In one embodiment, each received message is snooped and the source address and target address of the snooped message are compared to a predetermined list of acceptable addresses to determine validity, i.e. the predetermined attributes are the source address and the target address and/or port number. Particularly, in an Ethernet packet there is information regarding the source's and destination's media access control (MAC) and internet protocol (IP) address, and the respective port number. In one embodiment, the respective security monitor 30, or 120, compares these addresses with the predetermined list of acceptable source and destination addresses. In another embodiment, the respective security monitor 30, or 120, determines whether the source's IP and MAC addresses belong to the same component. In another embodiment, the respective security monitor 30, or 120, determines whether a source with the respective IP address and port number is authorized to send data to a destination with the respective IP address and port number. In the event that any of the above described addresses, or address relations, are invalid, i.e. the at least one predetermined attribute of the message does not meet the valid values of the predetermined validation parameter, the message is determined to be an anomalous message and an intrusion anomaly is detected.

In another embodiment, each received message is snooped and the packet of the snooped message is analyzed to determine any anomalies in the message. In one further embodiment, the message is analyzed to determine whether a value in the message is valid for the respective destination, i.e. the predetermined attribute of the message is the respective value and destination. For example, in a message targeting the steering wheel, a value for adjusting the steering wheel angle is only valid if it is within a predetermined steering wheel angle range. In the event that the value is outside of the predetermined steering wheel angle range, the message is determined to be an anomalous message and an intrusion anomaly is detected.

In another further embodiment, in a message which is composed of a plurality of signals with a particular relationship between them, the respective security monitor 30, or 120, determines whether the relationship is valid, i.e. the predetermined attribute of the message is the relationship between the values plurality of signals. For example, a message regarding wheel speed comprising four signals is received, the four signals being: signal a - front right wheel speed; signal b - front left wheel speed; signal c - back left wheel speed; signal d - back left wheel speed. In one non-limiting embodiment, in such an example the payload of the message packet is 8 bytes and each signal comprises 2 bytes of the packet. The respective security monitor 30, or 120, determines, without limitation: the difference between the value of signal a and the value of signal b; the difference between the value of signal b and the value of signal c; and optionally the differences between each two of signals a, b, c and d. The respective security monitor 30, or 120, compares the determined differences to one or more respective predetermined thresholds, i.e. the value of the predetermined validation parameter is the respective threshold. In the event that the determined difference, or differences, is greater than the respective threshold, or thresholds, the message is determined to be an anomalous message and an intrusion anomaly is detected.

In another embodiment, each received message is snooped and the packet of the snooped message is analyzed statistically to determine any anomalies in the message, i.e. the predetermined attribute is in relation to a plurality of received messages. In one further embodiment, the predetermined attribute is a timestamp of the message and is in relation to a plurality of previously received messages. For example, the respective security monitor 30, or 120, determines how many messages have been received, within a predetermined time interval. In the event that the number of received within the predetermined time interval, either in total or addressed to a particular ECU 20, 110, 350 or 360, including the current message, is greater than a predetermined threshold, an intrusion anomaly is detected. Particularly, the value of the predetermined validation parameter is the respective threshold of the number of messages received within the predetermined time interval. As known to those skilled in the art, in case of a denial of service attack, the total number of messages for any time interval increases, and the respective security monitor 30, or 120, can detect such an attack.

In another further embodiment, the predetermined attribute is the difference between the value of a payload signal of a first message and the value of a corresponding payload signal of a second message. For example, in the embodiment of system 300, a first message destined to bus 340 comprises a signal of the vehicle speed and a second message destined to a respective ECU 350 comprises a signal of the autonomous driving assistance system (ADAS). Security monitor 120 determines the difference between the value of the respective signal of the first message and the value of the respective signal of the second message. In the event that the difference is greater than a predetermined threshold, the messages are determined to be anomalous and an intrusion anomaly is detected.

In another embodiment, for periodic signals, i.e. commands which are sent to a particular system again and again for proper operation, an anomaly is detected when the periodicity is altered. Specifically, if the periodicity of received messages increases or decreases, by more than a predetermined threshold, an intrusion anomaly is detected.

In one embodiment, each security monitor 30 and/or 120 further determines the severity of any detected intrusion anomaly, in accordance with one or more predetermined severity rules. In one embodiment, 3 different levels of severity are assigned, however this is not meant to be limiting in any way. In another embodiment, the predetermined severity rules comprise, without limitation, one or more of: the difference between a command to a particular system and the current state of that system; the system which is the target of the anomalous message, i.e. anomalous messages targeting critical systems and safety systems will be assigned a higher severity rating; and, for a periodic signal, the degree by which the periodicity is disrupted.

Particularly, the difference between a command to a particular system and the current state of that system is measured in one embodiment by comparing the future state of the system after the command is executed to the current state of the system. For example, the speed which the vehicle will achieve after receiving a specific command is compared to the current speed of the vehicle. If the command has been detected as an intrusion anomaly, a large difference will increase the severity of the anomaly and a higher severity rating will be assigned. For periodic signals, i.e. commands which are sent to a particular system again and again for proper operation, an intrusion anomaly is detected in one embodiment when the periodicity is altered, as described above. Specifically, if the periodicity of received messages increases or decreases, by more than a predetermined threshold, an intrusion anomaly is detected. The distance of the periodicity distance from the predetermined threshold determines the severity. If the distance is large, the severity rating is higher. If the distance is smaller, the severity rating is lower.

In one embodiment, a higher value is assigned for a higher severity rating and a lower value is assigned for a lower severity rating, however this is not meant to be limiting in any way. Although the above has been described in relation to an embodiment where the severity is determined by security monitors 30 and/or 120, this is not meant to be limiting in any way. In another embodiment, anomaly analyzer 40 determines the severity of the intrusion anomalies, in cooperation with security monitors 30 and/or 120, or by itself.

In stage 1010, security monitors 30 and/or 120 output information regarding the detected intrusion anomalies of stage 1000 to anomaly analyzer 40. In one embodiment, the output information is transmitted using: a diagnostics over internet protocol (DoIP); a transmission control protocol (TCP); a unified diagnostic services (UDS) and/or a user datagram protocol (UDP).

In one embodiment, security monitors 30 and/or 120 generate diagnostic anomaly codes (DACs) to contain the information regarding the detected intrusion anomalies. The term DAC, as used herein, is meant as a code which indicates an anomaly which deviates from the proper configuration. As opposed to DTCs, DACs provide anomaly codes for complex anomalies, such as security flaws, safety flaws and hacking identification, as will be described further below. For example, if a DDOS attack is detected, such an attack would not constitute an anomaly associated with a standard DTC because each access attempt is proper. Only when detecting an accumulation of access attempts is the DDOS attack detected by security monitors 30 and/or 120, and an appropriate DAC is generated. Additionally, DTCs are typically limited in size, and can usually contain only 2 bytes of data, whereas a DAC can be larger and contain more data, as described below.

In one embodiment, each DAC is indicative of a respective intrusion anomaly. In another embodiment, the same DAC is generated for each intrusion anomaly and the payload of the DAC carries information indicative of the respective intrusion anomaly detected. In one embodiment, security monitors 30 and/or 120 output the relevant information to a diagnostic event manager (DEM), and the DEM (not shown) generates the respective DACs. In one embodiment, the output information comprises: the type of the intrusion anomaly; the severity of the intrusion anomaly; and any other relevant information.

In one embodiment, security monitors 30 and/or 120 store the information regarding the detected intrusion anomalies on a respective memory (not shown). In one further embodiment, anomaly analyzer 40 periodically requests the information regarding all detected intrusion anomalies. In another further embodiment, security monitors 30 and/or 120 periodically transmit the stored information to anomaly analyzer 40 without receiving a request therefrom, either at predetermined time intervals or responsive to predetermined rules. In one further embodiment, the predetermined rules comprise: transmitting information once at least a predetermined number of intrusion anomalies have been detected; transmitting information once at least a predetermined number of intrusion anomalies exhibiting a severity of a predetermined value have been detected; and/or transmitting information once at least a predetermined number of intrusion anomalies associated with at least a predetermined number, or types, of ECUs 20, 110, 350 and/or 360. In another embodiment, the information regarding the detected intrusion anomalies are transmitted along with any DTCs associated with ECUs 20, 110, 350 and/or 360. In another embodiment, the information regarding each detected intrusion anomaly is transmitted to anomaly analyzer upon detection of the respective intrusion anomaly.

In one non-limiting embodiment, the output message comprising the information of each respective intrusion anomaly comprises the following fields: message length, optionally with a size of 1 byte; a message identifier, optionally with a size of 4 bytes; an anomaly type, optionally with a size of 1 byte; an anomaly subtype, optionally with a size of 1 byte; the determined severity of the anomaly, optionally with a size of 1 byte; a first value field, optionally with a size of 1 byte; and an optional second value field, optionally with a size of 4 bytes.

For example, for an anomaly indicating that a value of a steering wheel angle is greater than the maximum value of the predetermined valid range of angles by 10 degrees, and the severity of the anomaly is 2, the message is optionally as follows:

| Length | Msg identifier | Type | Subtype | Severity | val0 | val1 |
|--------|---------------|------|---------|----------|------|------|

(continued)

| Length | Msg identifier | Type | Subtype | Severity | val0 | val1 |
|---|---|---|---|---|---|---|
| 15 | x | 1(value) | 1(too big) | 2 | 10 (deviation from range) | |
| 'x' is the ID of the message. | | | | | | |

In such an example, the second value field is not utilized. In another example, for an anomaly indicating that the difference between a value of a signal 'a' and a value of a signal 'b' is greater than a predetermined threshold, with a severity of 3, the message is optionally as follows:

| Length | Msg ID | Type | Subtype | Severity | val0 | vail |
|---|---|---|---|---|---|---|
| 15 | x | 2(correlation) | 1(too big) | 3 | deviation from allowed difference | signal a value signal b value |

In such an example, the second value field is utilized to transmit the actual signal values, along with the actual deviation value. In the event that the same message additionally comprises signals 'c' and 'd', as described above, the message is optionally as follows:

| Length | Msg identifier | Type | Subtype | Severity | val0 | vail |
|---|---|---|---|---|---|---|
| 15 | x | 2(correlation) | 1(too big) | 3 | the deviation from allowed difference | signal b value signal c value |

Thus, 2 DAC messages are sent for the same message.

In another example, where an invalid MAC address is detected, as described above, the message is optionally as follows:

| Length | Msg identifier | Type | Subtype | Severity | val0 | vail |
|---|---|---|---|---|---|---|
| 15 | IP of mismatch | 3 (Etherent spoofing) | 1(MAC IP mismatch) | 3 | MAC of mismatch (4 bytes) | MAC of mismatch( 2 bytes) |

The MAC address is 6 bytes long, and the first value field is only 2 bytes long, so the second value field is also used for the MAC address. As described above, a possible invalidity is when the source exhibiting the respective MAC address isn't authorized to send messages to the respective destination exhibiting the respective IP address. Thus, the anomaly subtype is a mismatch between MAC and IP addresses.

In another example, for an anomaly of a mismatch of values between two messages, as described above, the message is optionally as follows:

| Length | Msg identifier | Type | Subtype | Severity | val0 | vai1 |
|---|---|---|---|---|---|---|
| 15 | CAN id of the message | 10 (cross network) | 1 (value diff) | 3 | diff between signals values | Ethernet signal id |

Although the above examples illustrate an embodiment where the messages exhibit a length of 15 bytes, this is not meant to be limiting in any way, and messages with a variety of lengths can be generated. Although the above examples illustrate an embodiment where the relevant information of an anomaly is transmitted in a single message, this is not meant to be limiting in any way, and a plurality of messages can be generated for each detected intrusion anomaly.

In stage 1020, anomaly analyzer 40 accumulates the received output information of stage 1010 regarding the detected intrusion anomalies. Optionally, the received information is stored on memory 440. In stage 1030, anomaly analyzer 40 receives at least one vehicle status signal. In one embodiment, the at least one vehicle status signal is received by vehicle signal functionality 410. In another embodiment, the at least one vehicle status signal is received from Ethernet switch/hub 310 and/or communication control unit 330. The term 'vehicle status signal', as used herein, is defined as a signal which represents the current state of a particular system of the vehicle and/or a signal which represents conditions external to the vehicle. Specifically, in one embodiment, the at least one vehicle status signal comprises, without limitation: the speed of the vehicle; the angle of the steering wheel in relation to an initial position; which gear is the vehicle in; the position of the brakes; the status of the engine of the vehicle, e.g. the revolutions per minute (RPM); and/or the position of a gyro of the vehicle in relation to an initial position. In one further embodiment, the at least one vehicle status signal further comprises environment conditions, e.g. predetermined attributes of the weather, the amount of lighting outside of the vehicle and/or the type, or condition, of the road on which the vehicle is driving. Such signals are received from dedicated sensors of the vehicles and/or are received from an external source, such as the Internet. In another further embodiment, the at least one vehicle status signal further comprises the status of surrounding vehicles, e.g. distance from nearest vehicles, speed of surrounding vehicles and/or angular momentum of surrounding vehicles. Such signals are received from a radar system and/or via vehicle to vehicle (V2V) communication.

In one further embodiment, the at least one vehicle status signal is in relation to a respective predetermined threshold. In one example, the speed of the vehicle is compared to a predetermined speed threshold and it is determined whether the vehicle speed is greater than the predetermined speed threshold or less than the predetermined speed threshold. In another example, the angle of the steering wheel in relation to the initial position is compared to a predetermined angle threshold and it is determined whether the steering wheel angle is greater than the predetermined angle threshold or less than the predetermined angle threshold.

In another example, the current gear of the vehicle is compared to a predetermined gear threshold and it is determined whether the current gear of the vehicle is greater than the predetermined gear threshold or less than the predetermined gear threshold. In another example, the position of the brakes is compared to a predetermined brake threshold and it is determined whether the current brake position is greater than the predetermined brake threshold or less than the predetermined brake threshold. In one non-limiting embodiment, the predetermined brake threshold is given as:

$$BTH = |MAX - MIN| / 2 \qquad\qquad EQ.\ 1$$

where MAX is the position of the brakes when they are pressed down all the way and MIN is the position of the brakes when they are not pressed down.

In another example, the RPM of the engine is compared to a predetermined RPM threshold and it is determined whether the current RPM value is greater than the predetermined RPM threshold or less than the predetermined RPM threshold. In another example, the position of a gyro, in relation to an initial position is compared to a predetermined gyro threshold and it is determined whether the current gyro position value is greater than the predetermined gyro threshold or less than the predetermined gyro threshold.

In one embodiment, the comparison to the predetermined thresholds is performed by vehicle signal functionality 410. In another embodiment, the comparison is performed by other systems in the vehicle and the relative values of the vehicle status signals, i.e. the relationship of each signal to the respective predetermined value, are received by vehicle signal functionality 410. For example, a dedicated system, external to anomaly analyzer 40, determines whether the vehicle is travelling at a high speed or a low speed and vehicle signal functionality 410 receives a respective signal indicating whether the speed of the vehicle is high or low.

In optional stage 1040, anomaly analyzer 40 determines a grade for each of the received at least one vehicle status signal, further responsive to one or more predetermined grading rules. Optionally, the grades are determined by vehicle signal functionality 410. In one non-limiting embodiment, a first grade value is assigned when the respective vehicle status signal value is equal to zero. In such an embodiment, a second grade value is assigned when the respective vehicle status signal value is greater than zero, but less than the respective predetermined threshold. For example, if the speed of the vehicle is greater than zero, but less than the predetermined speed threshold, the second grade value is assigned to the vehicle speed. Additionally, a third grade value is assigned when the respective vehicle status signal value is greater than, or equal to, the respective predetermined threshold.

In optional stage 1050, a total grade of the current vehicle status is determined by anomaly analyzer, optionally by vehicle signal functionality 410, responsive to the received at least one vehicle status signal of stage 1030 and a predetermined grading rule. In one embodiment, the predetermined grading rule is given as:

$$TG = f(speed\_g,\ angle\_g,\ gear\_g,\ brake\_g,\ engine\_g,\ gyro\_g) \qquad EQ.\ 2$$

where TG is the total grade of the current vehicle status, speed_g is the vehicle speed grade of optional stage 1030, angle_g is the steering wheel angle grade, gear_g is the gear grade, brake_g is the brake grade, engine_g is the grade of the engine status and gyro_g is the grade of the status of the gyro, as described above, f is a function preferably defined by the original equipment manufacturer (OEM). In one non-limiting further embodiment, the total grade is defined as:

$$TG = w1*(speed\_g) + w2*(angle\_g) + w3*(gear\_g) + w4*(brake\_g) +$$
$$w5*(engine\_g) + w6*(gyro\_g) \qquad \text{EQ. 3}$$

where w1 is a predetermined weight for the grade of the vehicle speed of optional stage 1040, w2 is a predetermined weight for the grade of the steering wheel angle of optional stage 1040, w3 is a predetermined weight for the grade of the gear status of optional stage 1040, w4 is a predetermined weight for the grade of the brake status of optional stage 1040, w5 is a predetermined weight for the grade of the engine status of optional stage 1040 and w6 is a predetermined weight for the grade of the gyro status of optional stage 1040.

As described above, in one embodiment the at least one vehicle status signal further comprises environment conditions and/or the status of surrounding vehicles. In such an embodiment, the function of EQ. 2 further includes these signals, which are optionally graded, as described above in relation to optional stage 1040. Thus, a more accurate indication of the level of danger the vehicle is in is achieved.

Although optional stages 1040 - 1050 have been described in relation to an embodiment where grades are assigned to the received vehicle status signals, this is not meant to be limiting in any way. In another embodiment, an alternate method of utilizing the information of the received vehicle status signals can be used, without assigning actual grade values.

In optional stage 1060, anomaly analyzer 40, optionally by anomaly functionality 420 determines the duration of each anomaly, i.e. the number of anomalous messages within a predetermined time period for a respective system.

In stage 1070, anomaly analyzer 40 compares, responsive to the received at least one vehicle status signal of stage 1030, the accumulated output information regarding the detected intrusion anomalies of stage 1020 with the anomaly incident list. As described above, in one embodiment the anomaly incident list is stored on memory 440. Optionally, the comparison is performed by anomaly functionality 420.

The comparison is not meant to be limited to a direct item by item comparison, and identification of a range of values, or a translation of values may be utilized without exceeding the scope, and is in accordance with one or more predetermined anomaly incident list rules. In one particular embodiment, each anomaly incident in the anomaly incident list comprises a set of predetermined parameters, such that when predetermined attributes of the detected intrusion anomaly, or anomalies, meet the values of the respective parameters an anomaly incident is detected. In one embodiment, the predetermined rule sets comprise a plurality of predetermined parameters, including, without limitation: the number of detected anomalies received; the severity of the detected anomalies; the duration of the detected anomalies, as described above; and/or the number of ECUs targeted by the detected anomalies. In one embodiment, the severity and/or duration are determined in relation to the anomaly with the highest severity and longest duration, respectively. In another embodiment, the severity and/or duration are determined in relation to a predetermined number, or percentage, of the detected anomalies.

For example, anomaly analyzer 40 checks that there are no more than 2 anomalies with a severity grade greater than 2, etc. In one embodiment, each rule set on the anomaly incident list has an associated flag indicating whether a warning indicator is to be sent and/ or communication is to disabled. In an alternate embodiment, a plurality of anomaly incident lists are provided, each with an associated action, or actions. In another embodiment, the associated action is responsive to the particular type, or types, of anomaly detected.

Additionally, as described above, the comparison to the anomaly incident list is further performed in relation to the received at least one vehicle status signal of stage 1030. Particularly, in one embodiment, the comparison is performed in relation to the determined total grade TG of the vehicle status, described above in relation to EQ. 2. In one further embodiment, the parameter values of the predetermined events of the anomaly incident list are determined in accordance with the value of the total grade.

A non-limiting example of a plurality of anomaly incidents in an anomaly incident list is given in Table 1:

Table 1

| Grade | Ruleset 1 | | Ruleset 2 | | Ruleset 3 | | ... |
|---|---|---|---|---|---|---|---|
| TG1 | | | | | | | ... |
| | Number of types | >=2 | Number of types | >=1 | Number of types | >1 | |
| | Number of anomalies | >=2 | Number of anomalies | >=4 | Number of anomalies | >=2 | |
| | Severity of anomalies | > 2 | Severity of anomalies | > 2 | Severity of anomalies | > 3 | |
| | Duration | t1 | Duration | t1 | Duration | t1 | |
| TG2 | | | | | | | ... |
| | Number of types | >2 | Number of types | >1 | Number of types | >1 | |
| | Number of anomalies | >=2 | Number of anomalies | >4 | Number of anomalies | >=1 | |
| | Severity of anomalies | > 2 | Severity of anomalies | > 2 | Severity of anomalies | > 3 | |
| | Duration | t1 | Duration | t1 | Duration | t1 | |
| ... | ..... | | .... | | .... | | |

TG1 and TG2 are different total grades TG, where TG2 is greater than TG1. t1 is a predetermined duration threshold value. The anomaly incidents in this example are defined by different rulesets, in accordance with the respective grade TG. If the received detected anomalies meet the parameter values of a ruleset, it is determined that an anomaly incident has occurred. As shown in table 1, for different grades TG there are different rule sets. For example, as illustrated above, if there is a greater total grade TG, a higher number of types and/or anomalies is required to identify an anomaly incident. This is because a higher total grade TG indicates a more dangerous state of the vehicle and therefore the rule sets are arranged so as to reduce the number of false positives. However, this is not meant to be limiting in any way and different rule sets are associated with different respective total grades TG in accordance with any predetermined association rules. For example, for anomalies with a higher severity, less anomalies are required for a higher total grade TG, so as to rapidly respond to anomalies that are clear and could rapidly cause a dangerous situation in the vehicle, as described in ruleset3.

In one example, on receiving a total of 2 messages:

| Length | Msg identifier | Type | Subtype | Severity | val0 | vail |
|---|---|---|---|---|---|---|
| 15 | IP of mismatch | 3 (Etherent spoofing) | 1 (MAC IP mismatch) | 3 | MAC of mismatch (4 bytes) | MAC of mismatch( 2 bytes) |

and

| Length | Msg identifier | Type | Subtype | Severity | val0 | vail |
|---|---|---|---|---|---|---|
| 15 | x | 2(correlation) | 1(too big) | 3 | the deviation from allowed difference | signal a value signal b value |

and for a total vehicle grade TG1, the intrusion anomalies meet the respective parameters of the anomaly incident list, since they meet the conditions of ruleset1, i.e. there are 2 anomalies with different types and the severity is greater than 2.

However, the following anomalies will not meet the respective parameters of the anomaly incident list, i.e. they won't meet the conditions of any of the rule sets:

| Length | Msg identifier | Type | Subtype | Severity | val0 | vail |
|---|---|---|---|---|---|---|
| 15 | 100 | 1 (value) | 0(too small) | 3 | the deviation from the valid value | |

and

| Length | Msg identifier | Type | Subtype | Severity | val0 | val1 |
|---|---|---|---|---|---|---|
| 15 | 100 | 1 (value) | 0(too small) | 3 | the deviation from the valid value | |

Although there are 2 anomalies with a severity greater than 2, the anomalies have the same type, thus not meeting the conditions of ruleset1, ruleset2, or ruleset3.

Although the above has been described in relation to the type of the anomalies, this is not meant to be limiting in any way. In another embodiment, the rule sets of the anomaly incident list further comprise conditions regarding the subtypes of the anomalies, in addition to the conditions regarding the type of the anomalies.

In stage 1080, responsive to a predetermined outcome of the comparison of stage 1070, anomaly analyzer 40 outputs at least one predetermined incident signal. The predetermined incident signal comprises an indication that an anomaly incident has been detected. In one embodiment, responsive to a first outcome of the comparison of stage 1070 the predetermined incident signal is output and responsive to a second outcome of the comparison of stage 1070 the predetermined incident signal is not output. The first outcome is a determination that an anomaly incident has been detected and the second outcome is a determination than an anomaly incident has not been detected. In the embodiment described above where the comparison determines whether predetermined attribute/s of the respective intrusion anomalies meet the values of predetermined parameters of an anomaly incident in the anomaly incident list, the first outcome of the comparison is a determination that the predetermined attribute/s of the respective intrusion anomalies does meet the values of predetermined parameters of an anomaly incident and the second outcome of the comparison is a determination that the predetermined attribute/s of the respective intrusion anomalies does not meet the values of predetermined parameters of an anomaly incident.

In one embodiment, the predetermined incident signal is selected from a plurality of predetermined incident signals. The plurality of predetermined incident signals comprises: an alert message; and a command to disable communication to ECUs 20, 110, 350 and/or 360 for a predetermined time interval. In one embodiment, disabling communication comprises disabling a communication function of communication control unit 320 or communication control unit 330. In one further embodiment, the alert message is transmitted to a server. In another further embodiment, the alert message is displayed to a driver of the vehicle. Optionally, the displayed alert message can prompt the driver to pull over and stop the car. Further optionally, in an autonomous car, the alert message can cause the car to pull over and stop. In one embodiment, the command to disable a communication function of communication control unit 320 or communication control unit 330 is performed by utilizing a Unified Diagnostic Services (UDS) protocol message as defined in ISO 14229-1. In this particular embodiment, anomaly analyzer 40 uses a service 0x31 request over UDS with communication control unit 320 or communication control unit 330 as a target of the message to modify the state of communication control unit 320 or communication control unit 330 so as to block any incoming request.

In one embodiment, the predetermined incident signal is selected from the plurality of incident signals responsive to the respective detected one of the plurality of anomaly incidents, i.e. for each detected anomaly incident a different predetermined incident signal is selected. In another embodiment, an alert message is always generated and the command to disable a communication function of communication control unit 320 or communication control unit 330 is generated only responsive to: the detection of certain predetermined anomaly incidents; and/or the received at least one vehicle signal meeting one or more predetermined parameters, such as a predetermined vehicle grade.

In optional stage 1090, responsive to an detected anomaly incident of stage 1080, anomaly analyzer 40, optionally adjustment functionality 430 thereof, generates an adjustment signal which is output to one or more of: ECUs 20, 110, 350 or 360; security monitors 30 and/or 120; or communication control unit 320 and/or 330. Responsive to the generated adjustment signal, future anomaly identification is performed in accordance with an adjusted set of validation values. Particularly, as described above, an anomaly is detected responsive to a predetermined set of anomaly rules. If an anomaly incident has been detected, a more stringent set of anomaly rules are utilized, because the security risk has increased. For example, if a denial of service attack has been detected, the generated adjustment signal causes security monitors 30 and/or 120 to adjust the respective validation values, such that the number of messages within the predetermined time interval which triggers detection of the anomaly is reduced.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination. In particular, the invention has been described with an identification of each powered device by a class, however this is not meant to be limiting in any way. In an alternative embodiment, all powered device are treated equally, and thus the identification of class with its associated power requirements is not required.

Unless otherwise defined, all technical and scientific terms used herein have the same meanings as are commonly understood by one of ordinary skill in the art to which this invention belongs. Although methods similar or equivalent to those described herein can be used in the practice or testing of the present invention, suitable methods are described herein.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof which would occur to persons skilled in the art upon reading the foregoing description.

**Claims**

1. A system (10, 100, 200, 300, 400) for monitoring intrusion anomalies on any portion of the communication network of an automotive vehicle, the system comprising:

   at least one electronic control unit (20, 110, 350, 360); and
   at least one security monitor (30, 120) arranged to detect intrusion anomalies associated with said at least one electronic control unit and to output information regarding said detected intrusion anomalies,
   **CHARACTERIZED BY**:
   an anomaly analyzer (40) arranged to:

   accumulate said output information regarding said detected intrusion anomalies;
   receive at least one vehicle status signal;
   compare, responsive to said received at least one vehicle status signal, the accumulated output information regarding said detected intrusion anomalies with an anomaly incident list, the anomaly incident list comprising information regarding predetermined attributes of at least one anomaly incident; and
   responsive to a predetermined outcome of said comparison, output a predetermined incident signal.

2. The system of claim 1, wherein said anomaly analyzer (40) is further arranged to determine a vehicle status grade, said vehicle status grade determined responsive to a predetermined function of said received at least one vehicle status signal,

   wherein said anomaly incident list comprises a plurality of sets of anomaly incident list parameter values, said comparison performed in relation to said plurality of sets of anomaly incident list parameter values, and
   wherein said anomaly incident list parameter values are selected responsive to said determined vehicle status grade.

3. The system of claim 1, wherein said at least one security monitor (30, 120) is arranged to detect said intrusion anomalies responsive to a predetermined attribute of one or more messages not meeting a predetermined validation parameter value, and
wherein responsive to said predetermined outcome of said comparison, said anomaly analyzer (40) is further arranged to:

> generate an adjustment signal; and
> output said generated adjustment signal to said at least one security monitor, said predetermined validation parameter value of said at least one security monitor adjusted responsive to said generated adjustment signal.

4. The system of any of claims 1 - 3, wherein said received at least one vehicle status signal comprises at least one signal indicating a status of at least one internal system of the vehicle,
wherein optionally said received at least one vehicle status signal indicating a status of at least one internal system of the vehicle comprises at least one signal indicating a status of:

> a speed of the vehicle;
> a steering wheel angle of the vehicle;
> a gear the vehicle is in;
> brakes of the vehicle;
> an engine of the vehicle; or
> a position of a gyro of the vehicle.

5. The system of any of claims 1 - 3, wherein said received at least one vehicle status signal comprises at least one signal indicating a status of an environment external to the vehicle.

6. The system of any of claims 1 - 3, wherein said received at least one vehicle status signal comprises at least one signal indicating a status of additional vehicles surrounding the vehicle.

7. The system of any of claims 1 - 3, further comprising a communication control unit (320, 330) arranged to control data communication with said at least one electronic control unit (350, 360),

> wherein said at least one anomaly incident comprises a plurality of anomaly incidents, said predetermined outcome of said comparison comprising identifying that said accumulated output information indicates the presence of one of said plurality of anomaly incidents,
> wherein said predetermined incident signal is selected from a plurality of predetermined incident signals responsive to said respective detected one of said plurality of anomaly incidents, and
> wherein, said plurality of predetermined incident signals comprises:

> > an alert message; and
> > a command to disable a communication function of said communication control unit.

8. The system of any of claims 1 - 3, wherein said at least one electronic control unit comprises a plurality of electronic control units (20), and
wherein said at least one security monitor comprises a plurality of local security monitors (30), each of said plurality of local security monitors associated with a respective one of said plurality of electronic control units.

9. A method of monitoring intrusion anomalies on any portion of the communication network of an automotive vehicle, the method comprising:

> detecting (1000) intrusion anomalies associated with at least one electronic control unit; and
> outputting (1010) information regarding said detected intrusion anomalies,
> **CHARACTERIZED BY**:

> > accumulating (1020) said output information regarding said detected intrusion anomalies;
> > receiving (1030) at least one predetermined vehicle status signal;
> > comparing (1070), responsive to said received at least one vehicle status signal, said accumulated output information with an anomaly incident list, the anomaly incident list comprising information regarding predetermined attributes of at least one anomaly incident; and

responsive to a predetermined outcome of said comparison, outputting (1080) a predetermined incident signal.

10. The method of claim 9, further comprising determining (1040) a vehicle status grade, said vehicle status grade determined (1050) responsive to a predetermined function of said received at least one vehicle status signal,

wherein said anomaly incident list comprises a plurality of sets of anomaly incident list parameter values, said comparison performed in relation to said plurality of sets of anomaly incident list parameter values, and

wherein said anomaly incident list parameter values are selected (1070) responsive to said determined vehicle status grade.

11. The method of claim 9, wherein said detecting (1000) said intrusion anomalies is responsive to a predetermined attribute of one or more messages not meeting a predetermined validation parameter value, and

wherein responsive to said predetermined outcome of said comparison, the method further comprises (1080):

generating an adjustment signal; and

outputting said generated adjustment signal, said predetermined validation parameter value adjusted responsive to said output adjustment signal.

12. The method of any of claims 9 - 11, wherein said received at least one vehicle status signal comprises at least one signal indicating a status of at least one internal system of the vehicle,

wherein optionally

said received at least one vehicle status signal indicating a status of at least one internal system of the vehicle comprises at least one signal indicating a status of:

a speed of the vehicle;

a steering wheel angle of the vehicle;

a gear the vehicle is in;

brakes of the vehicle;

an engine of the vehicle; or

a position of a gyro of the vehicle.

13. The method of any of claims 9 - 11, wherein said received at least one vehicle status signal comprises at least one signal indicating a status of an environment external to the vehicle.

14. The method of any of claims 9 - 11, wherein said received at least one vehicle status signal comprises at least one signal indicating a status of additional vehicles surrounding the vehicle.

15. The method of any of claims 9 - 11,

wherein said at least one anomaly incident comprises a plurality of anomaly incidents, said predetermined outcome of said comparison comprising identifying that said accumulated output information indicates the presence of one of said plurality of anomaly incidents,

wherein said predetermined incident signal is selected from a plurality of predetermined incident signals responsive to said respective detected one of said plurality of anomaly incidents, and

wherein, said plurality of predetermined incident signals comprises:

an alert message; and

a command to disable communication to the at least one electronic control unit.

**Patentansprüche**

1. System (10, 100, 200, 300, 400) zum Überwachen von Eindringanomalien in jedem Abschnitt des Kommunikationsnetzwerks eines Kraftfahrzeugs, wobei das System umfasst:

mindestens eine elektronische Steuereinheit (20, 110, 350, 360); und

mindestens einen Sicherheitsmonitor (30, 120), der dazu eingerichtet ist, mit der mindestens einen elektronischen Steuereinheit verbundene Eindringanomalien zu erkennen und Informationen bezüglich der erkannten Eindringanomalien auszugeben,

**gekennzeichnet durch:**

einen Anomalieanalysator (40), der eingerichtet ist zum:

Sammeln der Ausgabeinformationen bezüglich der erkannten Eindringanomalien;
Empfangen mindestens eines Fahrzeugstatussignals;
Vergleichen der gesammelten Ausgabeinformationen bezüglich der erkannten Eindringanomalien mit einer Anomalievorfallliste als Reaktion auf das empfangene mindestens eine Fahrzeugstatussignal, wobei die Anomalievorfallliste Informationen bezüglich vorbestimmter Attribute mindestens eines Anomalievorfalls umfasst; und
als Reaktion auf ein vorbestimmtes Ergebnis des Vergleichs, Ausgeben eines vorbestimmten Vorfallsignals.

2. System nach Anspruch 1, wobei der Anomalieanalysator (40) ferner dazu eingerichtet ist, einen Fahrzeugstatusgrad zu bestimmen, wobei der Fahrzeugstatusgrad als Reaktion auf eine vorbestimmte Funktion des empfangenen mindestens einen Fahrzeugstatussignals bestimmt wird,

wobei die Anomalievorfallliste eine Vielzahl von Sätzen von Anomalievorfalllistenparameterwerten umfasst, wobei der Vergleich in Bezug auf die Vielzahl von Sätzen von Anomalievorfalllistenparameterwerten durchgeführt wird, und
wobei die Parameterwerte der Anomalievorfallliste als Reaktion auf den bestimmten Fahrzeugstatusgrad ausgewählt werden.

3. System nach Anspruch 1, wobei der mindestens eine Sicherheitsmonitor (30, 120) dazu eingerichtet ist, die Eindringanomalien als Reaktion auf ein vorbestimmtes Attribut einer oder mehrerer Nachrichten, die einen vorbestimmten Validierungsparameterwert nicht erfüllen, zu erkennen, und
wobei der Anomalieanalysator (40) als Reaktion auf das vorbestimmte Ergebnis des Vergleichs ferner eingerichtet ist zum:

Erzeugen eines Anpassungssignals; und
Ausgeben des erzeugten Anpassungssignals an den mindestens einen Sicherheitsmonitor, wobei der vorbestimmte Validierungsparameterwert des mindestens einen Sicherheitsmonitors als Reaktion auf das generierte Anpassungssignal angepasst wird.

4. System nach einem der Ansprüche 1 bis 3, wobei das empfangene mindestens eine Fahrzeugstatussignal mindestens ein Signal umfasst, das einen Status von mindestens einem internen System des Fahrzeugs angibt,
wobei optional das empfangene mindestens eine Fahrzeugstatussignal, das einen Status von mindestens einem internen System des Fahrzeugs angibt, mindestens ein Signal umfasst, das einen Status angibt von:

einer Geschwindigkeit des Fahrzeugs;
einem Lenkradwinkel des Fahrzeugs;
einem Gang, in dem sich das Fahrzeug befindet;
Bremsen des Fahrzeugs;
einem Motor des Fahrzeugs; oder
einer Position eines Kreisels des Fahrzeugs.

5. System nach einem der Ansprüche 1 bis 3, wobei das mindestens eine empfangene Fahrzeugstatussignal mindestens ein Signal umfasst, das einen Status einer Umgebung außerhalb des Fahrzeugs angibt.

6. System nach einem der Ansprüche 1 bis 3, wobei das empfangene mindestens eine Fahrzeugstatussignal mindestens ein Signal umfasst, das einen Status zusätzlicher Fahrzeuge angibt, die das Fahrzeug umgeben.

7. System nach einem der Ansprüche 1 bis 3, das ferner eine Kommunikationssteuereinheit (320, 330) umfasst, die dazu eingerichtet ist, die Datenkommunikation mit der mindestens einen elektronischen Steuereinheit (350, 360) zu steuern,

wobei der mindestens eine Anomalievorfall eine Vielzahl von Anomalievorfällen umfasst, wobei das vorbestimmte Ergebnis des Vergleichs das Identifizieren umfasst, dass die akkumulierten Ausgabeinformationen das Vorhandensein eines der Vielzahl von Anomalievorfällen angeben,
wobei das vorbestimmte Vorfallssignal aus einer Vielzahl von vorbestimmten Vorfallsignalen als Reaktion auf den jeweils erkannten Anomalievorfall aus der Vielzahl von Anomalievorfällen ausgewählt wird, und
wobei die Vielzahl von vorbestimmten Vorfallsignalen umfasst:

eine Warnmeldung; und
einen Befehl zum Deaktivieren einer Kommunikationsfunktion der Kommunikationssteuereinheit.

**8.** System nach einem der Ansprüche 1 bis 3, wobei die mindestens eine elektronische Steuereinheit eine Vielzahl von elektronischen Steuereinheiten (20) umfasst, und
wobei der mindestens eine Sicherheitsmonitor eine Vielzahl von lokalen Sicherheitsmonitoren (30) umfasst, wobei jeder der Vielzahl von lokalen Sicherheitsmonitoren mit einer jeweiligen der Vielzahl von elektronischen Steuereinheiten verbunden ist.

**9.** Verfahren zum Überwachen von Eindringanomalien in jedem Abschnitt des Kommunikationsnetzwerks eines Kraftfahrzeugs, wobei das Verfahren umfasst:

Erkennen (1000) von Eindringanomalien, die mit mindestens einer elektronischen Steuereinheit verbunden sind; und
Ausgeben (1010) von Informationen bezüglich der erkannten Eindringanomalien,
**gekennzeichnet durch:**

Sammeln (1020) der Ausgabeinformationen bezüglich der erkannten Eindringanomalien;
Empfangen (1030) mindestens eines vorbestimmten Fahrzeugstatussignals;
Vergleichen (1070) der gesammelten Ausgabeinformationen mit einer Anomalievorfallliste als Reaktion auf das empfangene mindestens eine Fahrzeugstatussignal, wobei die Anomalievorfallliste Informationen zu vorbestimmten Attributen mindestens eines Anomalievorfalls umfasst; und
als Reaktion auf ein vorbestimmtes Ergebnis des Vergleichs, Ausgeben (1080) eines vorbestimmten Vorfallsignals.

**10.** Verfahren nach Anspruch 9, ferner umfassend das Bestimmen (1040) eines Fahrzeugstatusgrades, wobei der Fahrzeugstatusgrad in Reaktion auf eine vorbestimmte Funktion des empfangenen mindestens einen Fahrzeugstatussignals bestimmt (1050) wird,

wobei die Anomalievorfallliste eine Vielzahl von Sätzen von Anomalievorfalllistenparameterwerten umfasst,
wobei der Vergleich in Bezug auf die Vielzahl von Sätzen von Anomalievorfalllistenparameterwerten durchgeführt wird, und
wobei die Parameterwerte der Anomalievorfallliste als Reaktion auf den bestimmten (1070) Fahrzeugstatusgrad ausgewählt werden.

**11.** Verfahren nach Anspruch 9, wobei das Erkennen (1000) der Eindringanomalien auf ein vorbestimmtes Attribut einer oder mehrerer Nachrichten reagiert, die einen vorbestimmten Validierungsparameterwert nicht erfüllen, und
wobei das Verfahren als Reaktion auf das vorbestimmte Ergebnis des Vergleichs ferner umfasst (1080):

Erzeugen eines Anpassungssignals; und
Ausgeben des erzeugten Anpassungssignals, wobei der vorbestimmte Validierungsparameterwert als Reaktion auf das ausgegebene Anpassungssignal angepasst wird.

**12.** Verfahren nach einem der Ansprüche 9 bis 11, wobei das empfangene mindestens eine Fahrzeugstatussignal mindestens ein Signal umfasst, das einen Status von mindestens einem internen System des Fahrzeugs angibt,
wobei optional das empfangene mindestens eine Fahrzeugstatussignal, das einen Status von mindestens einem internen System des Fahrzeugs angibt, mindestens ein Signal umfasst, das einen Status angibt von:

einer Geschwindigkeit des Fahrzeugs;
einem Lenkradwinkel des Fahrzeugs;
einem Gang, in dem sich das Fahrzeug befindet;
Bremsen des Fahrzeugs;
einem Motor des Fahrzeugs; oder

einer Position eines Kreisels des Fahrzeugs.

**13.** Verfahren nach einem der Ansprüche 9 bis 11, wobei das mindestens eine empfangene Fahrzeugstatussignal mindestens ein Signal umfasst, das einen Status einer Umgebung außerhalb des Fahrzeugs angibt.

**14.** Verfahren nach einem der Ansprüche 9 bis 11, wobei das mindestens eine empfangene Fahrzeugstatussignal mindestens ein Signal umfasst, das einen Status zusätzlicher Fahrzeuge angibt, die das Fahrzeug umgeben.

**15.** Verfahren nach einem der Ansprüche 9 bis 11,

wobei der mindestens eine Anomalievorfall eine Vielzahl von Anomalievorfällen umfasst, wobei das vorbestimmte Ergebnis des Vergleichs das Identifizieren umfasst, dass die akkumulierten Ausgabeinformationen das Vorhandensein eines der Vielzahl von Anomalievorfällen angeben,
wobei das vorbestimmte Vorfallssignal aus einer Vielzahl von vorbestimmten Vorfallsignalen als Reaktion auf den jeweils erkannten Anomalievorfall aus der Vielzahl von Anomalievorfällen ausgewählt wird, und
wobei die Vielzahl von vorbestimmten Vorfallsignalen umfasst:

eine Warnmeldung; und
einen Befehl zum Deaktivieren der Kommunikation mit der mindestens einen elektronischen Steuereinheit.

## Revendications

**1.** Système (10, 100, 200, 300, 400) de surveillance d'anomalies d'intrusion sur une quelconque partie du réseau de communication d'un véhicule automobile, le système comprenant :

au moins une unité de commande électronique (20, 110, 350, 360) ; et
au moins un dispositif de surveillance de sécurité (30, 120) conçu pour détecter des anomalies d'intrusion associées à ladite au moins une unité de commande électronique et pour émettre des informations concernant lesdites anomalies d'intrusion détectées,
**caractérisé par** :
un dispositif d'analyse d'anomalies (40) conçu pour :

accumuler lesdites informations émises concernant lesdites anomalies d'intrusion détectées ;
recevoir au moins un signal d'état de véhicule ;
comparer, en réponse audit au moins un signal d'état de véhicule reçu, les informations émises accumulées concernant lesdites anomalies d'intrusion détectées avec une liste d'incidents d'anomalies, la liste d'incidents d'anomalies comprenant des informations concernant des attributs prédéterminés d'au moins un incident d'anomalie ; et
en réponse à un résultat prédéterminé de ladite comparaison, émettre un signal d'incident prédéterminé.

**2.** Système selon la revendication 1, dans lequel le dispositif d'analyse d'anomalies (40) est en outre conçu pour déterminer une note d'état de véhicule, ladite note d'état de véhicule étant déterminée en réponse à une fonction prédéterminée dudit au moins un signal d'état de véhicule reçu,

dans lequel ladite liste d'incidents d'anomalies comprend une pluralité d'ensembles de valeurs de paramètres de liste d'incidents d'anomalies, ladite comparaison étant réalisée par rapport à ladite pluralité d'ensembles de valeurs de paramètres de liste d'incidents d'anomalies, et
dans lequel les valeurs de paramètres de liste d'incidents d'anomalies sont sélectionnées en réponse à ladite note d'état de véhicule déterminée.

**3.** Système selon la revendication 1, dans lequel ledit au moins un dispositif de surveillance de sécurité (30, 120) est conçu pour détecter lesdites anomalies d'intrusion en réponse à un attribut prédéterminé d'un ou de plusieurs messages ne satisfaisant pas à une valeur de paramètre de validation prédéterminée, et
dans lequel, en réponse audit résultat prédéterminé de ladite comparaison, ledit dispositif d'analyse d'anomalies (40) est en outre conçu pour :

générer un signal d'ajustement ; et

émettre ledit signal d'ajustement généré vers ledit au moins un dispositif de surveillance de sécurité, ladite valeur de paramètre de validation prédéterminé dudit au moins un dispositif de surveillance de sécurité étant ajustée en réponse audit signal d'ajustement généré.

4. Système selon l'une quelconque des revendications 1 à 3, dans lequel ledit au dit signal d'état de véhicule reçu comprend au moins un signal indiquant un état d'au moins un système interne du véhicule, dans lequel, éventuellement, ledit au moins un signal d'état de véhicule reçu indiquant un état d'au moins un système interne du véhicule comprend au moins un signal indiquant un état :

   d'une vitesse du véhicule ;
   d'un angle de braquage de volant du véhicule ;
   d'une vitesse dans laquelle le véhicule est engagé ;
   des freins du véhicule ;
   d'un moteur du véhicule ; ou
   d'une position d'un gyroscope du véhicule.

5. Système selon l'une quelconque des revendications 1 à 3, dans lequel ledit au moins un signal d'état de véhicule reçu comprend au moins un signal indiquant un état d'un environnement extérieur au véhicule.

6. Système selon l'une quelconque des revendications 1 à 3, dans lequel ledit au moins un signal d'état de véhicule reçu comprend au moins un signal indiquant un état d'autres véhicules entourant le véhicule.

7. Système selon l'une quelconque des revendications 1 à 3, comprenant en outre une unité de commande de communication (320, 330) conçue pour commander une communication de données avec ladite au moins une unité de commande électronique (350, 360),

   dans lequel ledit au moins un incident d'anomalie comprend une pluralité d'incidents d'anomalies, ledit résultat prédéterminé de ladite comparaison consistant à identifier que lesdites informations émises accumulées indiquent la présence de l'un de ladite pluralité d'incidents d'anomalies,
   dans lequel ledit signal d'incident prédéterminé est sélectionné parmi une pluralité de signaux d'incident prédéterminés en réponse à l'un respectif des incidents d'anomalies détectés parmi la pluralité d'incidents d'anomalies, et
   dans lequel, ladite pluralité de signaux d'incidents prédéterminés comprend :

      un message d'alerte, et
      une instruction de désactivation d'une fonction de communication de ladite unité de commande de communication.

8. Système selon l'une quelconque des revendications 1 à 3, dans lequel ladite au moins une unité de commande électronique comprend une pluralité d'unités de commande électronique (20), et dans lequel ledit au moins un dispositif de surveillance de sécurité comprend une pluralité de dispositifs de surveillance de sécurité locaux (30), chacun de ladite pluralité de dispositifs de surveillance de sécurité locaux étant associé à l'une de ladite pluralité d'unités de commande électronique.

9. Procédé de surveillance d'anomalies d'intrusion sur une partie quelconque du réseau de communication d'un véhicule automobile, le procédé comprenant :

   la détection (1000) d'anomalies d'intrusion associées à au moins une unité de commande électronique ; et
   l'émission (1010) d'informations concernant lesdites anomalies d'intrusion détectées,
   **caractérisé par** :

      l'accumulation (1020) desdites informations émises concernant lesdites anomalies d'intrusion détectées ;
      la réception (1030) d'au moins un signal d'état de véhicule prédéterminé ;
      la comparaison (1070), en réponse audit au moins un signal d'état de véhicule reçu, desdites informations émises accumulées avec une liste d'incidents d'anomalies, la liste d'incidents d'anomalies comprenant des informations concernant des attributs prédéterminés d'au moins un incident d'anomalie ; et
      en réponse à un résultat prédéterminé de ladite comparaison, l'émission (1080) d'un signal incident prédéterminé.

**10.** Procédé selon la revendication 9, comprenant en outre la détermination (1040) d'une note d'état de véhicule, ladite note d'état de véhicule déterminée (1050) en réponse à une fonction prédéterminée dudit au moins un signal d'état de véhicule reçu,

dans lequel ladite liste d'incidents d'anomalies comprend une pluralité d'ensembles de valeurs de paramètres de liste d'incidents d'anomalies, ladite comparaison étant réalisée par rapport à ladite pluralité d'ensembles de valeurs de paramètres de liste d'incidents d'anomalies, et
dans lequel lesdites valeurs de paramètres de liste d'incidents d'anomalies sont sélectionnées (1070) en réponse à ladite note d'état de véhicule déterminée.

**11.** Procédé selon la revendication 9, dans lequel la détection (1000) desdites anomalies d'intrusions est réalisée en réponse à un attribut prédéterminé d'un ou de plusieurs messages ne satisfaisant pas à une valeur de paramètre de validation prédéterminée, et
dans lequel, en réponse audit résultat prédéterminé de ladite comparaison, le procédé comprend en outre (1080) :

la génération d'un signal d'ajustement ; et
l'émission dudit signal d'ajustement généré, ladite valeur de paramètre de validation prédéterminé étant ajustée en réponse audit signal d'ajustement émis.

**12.** Procédé selon l'une quelconque des revendications 9 à 11, dans lequel ledit au moins un signal d'état de véhicule reçu comprend au moins un signal indiquant un état d'au moins un système interne du véhicule,
dans lequel, éventuellement, ledit au moins un signal d'état de véhicule reçu indiquant un état d'au moins un système interne du véhicule comprend au moins un signal indiquant un état :

d'une vitesse du véhicule ;
d'un angle de braquage de volant du véhicule ;
d'une vitesse dans laquelle le véhicule est engagé ;
des freins du véhicule ;
d'un moteur du véhicule ; ou
d'une position d'un gyroscope du véhicule.

**13.** Procédé selon l'une quelconque des revendications 9 à 11, dans lequel ledit au moins un signal d'état de véhicule reçu comprend au moins un signal indiquant un état d'un environnement extérieur au véhicule.

**14.** Procédé selon l'une quelconque des revendications 9 à 11, dans laquelle le signal d'état du véhicule reçu comprend au moins un signal indiquant un état de véhicules supplémentaires entourant le véhicule.

**15.** Procédé selon l'une quelconque des revendications 9 à 11,

dans lequel ledit au moins un incident d'anomalie comprend une pluralité d'incidents d'anomalies, ledit résultat prédéterminé de ladite comparaison consistant à identifier que lesdites informations émises accumulées indiquent la présence de l'un de ladite pluralité d'incidents d'anomalies,
dans lequel ledit signal d'incident prédéterminé est sélectionné parmi une pluralité de signaux d'incident prédéterminés en réponse à l'un respectif des incidents d'anomalies détectés parmi la pluralité d'incidents d'anomalies, et
dans lequel, ladite pluralité de signaux d'incidents prédéterminés comprend :

un message d'alerte, et
une instruction de désactivation de communication avec l'ai moins une unité de commande électronique.

10

ECU
MONITOR

30     20

ECU
MONITOR

30     20

ECU
MONITOR

30     20

40

ANOMALY
ANALYZER

FIG. 1A

100

ECU

110

ECU

110

ECU

110

40

ANOMALY
ANALYZER

120

SECURITY
MONITOR

FIG. 1B

200

ECU

MONITOR

30 ⌒ 20

ECU

MONITOR

30 ⌒ 20

ECU

MONITOR

30 ⌒ 20

ECU

⌒ 110

ECU

⌒ 110

ECU

⌒ 110

40 ⌒ ANOMALY ANALYZER

120 ⌒ SECURITY MONITOR

FIG. 1C

FIG. 1D

EP 4 004 782 B1

FIG. 1E

ANOMALY
ANALYZER

VEHICLE
SIGNAL

410

ANOMALY

420

ADJUST

430

MEMORY

440

COMM.
NODE

400

40

FIG. 1F

| 1000 | DETECT INTRUSION ANOMALIES ASSOCIATED WITH AT LEAST ONE ECU, OPT. PLURALITY OF ECUS, OPT. RESPONSIVE TO PREDETERMINED ATTRIBUTE OF ONE OR MORE MESSAGES NOT MEETING A VALIDATION PARAMETER VALUE |
| 1010 | OUTPUT INFORMATION REGARDING DETECTED INTRUSION ANOMALIES |
| 1020 | ACCUMULATE OUTPUT INFORMATION REGARDED DETECTED INTRUSION ANOMALIES |
| 1030 | RECEIVE AT LEAST ONE VEHICLE STATUS SIGNAL, OPT. PLURALITY OF SIGNALS, OPT. AT LEAST ONE SIGNAL INDICATING STATUS OF AT LEAST ONE INTERNAL SYSTEM OF VEHICLE, OPT. SPEED, STEERING WHEEL ANGLE, GEAR, BRAKES, ENGINE OR GYRO POSITION, OPT. SIGNAL INDICATING STATUS OF EXTERNAL ENVIRONMENT, OPT. SIGNAL INDICATING STATUS OF SURROUNDING VEHICLES |
| 1040 | (OPT.) DETERMINE GRADE OF EACH VEHICLE STATUS SIGNAL |
| 1050 | (OPT.) DETERMINE VEHICLE STATUS GRADE RESPONSIVE TO FUNCTION OF STATUS SIGNAL |
| 1060 | (OPT.) DETERMINE DURATION OF EACH INTRUSION ANOMALY |
| 1070 | COMPARE, RESPONSIVE TO RECEIVED VEHICLE STATUS SIGNAL/S, ACCUMULATED INFORMATION WITH ANOMALY INCIDENT LIST COMPRISING AT LEAST ONE ANOMALY INCIDENT, OPT. PLURALITY OF INCIDENTS, OPT. RESPONSIVE TO PLURALITY OF SETS OF ANOMALY INCIDENT LIST PARAMETER VALUES, SELECTED RESPONSIVE TO VEHICLE STATUS GRADE |
| 1080 | RESPONSIVE TO PREDETERMINED OUTCOME OF COMPARISON, OUTPUT PREDETERMINED INCIDENT SIGNAL, OPT. ALERT MESSAGE OR COMMAND TO DISABLE COMMUNICATION TO ECU/S, OPT. SELECTED RESPONSIVE TO DETECTED ANOMALY INCIDENT |
| 1090 | (OPT.) RESPONSIVE TO OUTCOME OF COMPARISON, GENERATE ADJUSTMENT SIGNAL AND OUTPUT GENERATED SIGNAL, VALIDATION PARAMETER VALUE/S ADJSUTED RESPONSVIE TO ADJUSTMENT SIGNAL |

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62877962
- EP 3148236 A
- EP 2892202 A
- US 2020053113 A

**Non-patent literature cited in the description**

- **WASICEK et al.** Context-aware Intrusion Detection in Automotive Control Systems. *5th ESCAR USA conference,* 21 June 2017